# EUROPEAN PATENT APPLICATION

(11) **EP 2 117 226 A1**
(43) Date of publication of application: **11.11.2009**
(21) Application number: 08020583.4
(22) Date of filing: 26.11.2008
(51) Int. Cl.: H04N 5/232

(54) **Image processing method, electronic device thereof, and recording medium thereof**

(30) Priority: 05.05.2008 TW 97116576
(71) Applicant: HTC Corporation, Taoyuan County 330 (TW)
(72) Inventor: Lin, Yu-Chao, Taoyuan County 330 (TW); Lee, che-Hung, Taoyuan County 330 (TW); Chen, Ying-Ju, Taoyuan County 330 (TW); Li, Kuan-Wei, Taoyuan County 330 (TW); Yang, Yi-Fan, Taoyuan County 330 (TW)
(74) Representative: Becker, Eberhard

(57) **Abstract**

An image processing method, an electronic device (300) thereof, and a recording medium thereof are provided, which are applicable for processing an image captured by an electronic device (300). In this method, a default direction is defined first, and a current usage direction of the electronic device (300) is obtained then. If the usage direction is not consistent with the default direction, the image is adjusted to a correct direction according to both the usage direction and the default direction. Finally, the adjusted image is recorded. Therefore, regardless of the direction along which the user holds the electronic device (300) when capturing the image, the recorded image is always in the correct direction. The rotation operations performed to the images that are not in the correct direction can be omitted when browsing the images, so as to greatly increase the convenience and smoothness in browsing images.

## Description

### BACKGROUND OF THE INVENTION

### 1. Field of the Invention

The present invention generally relates to a relevant application of a digital image, in particular, to a method of adjusting a display angle of an image, an electronic device thereof, and a recording medium thereof.

### 2. Description of Related Art

In recent years, along with the development of photography optical system and maturation of digital signal processing technique, digital cameras have gradually replaced the conventional cameras to become one of the indispensable tools for modem people, and the photography function is further integrated in various mobile phone products to enable users to take favourite pictures at anytime anywhere. No matter the digital cameras or camera phones integrated with the photography function, the most significant difference from the conventional cameras lies in that the pictures taken by the user can be viewed directly without developing the films. Besides, the digital picture files are recorded in a memory card or computer hard disk, which not only saves the cost for developing the films, but also achieves the purpose of keeping the pictures for a long time.

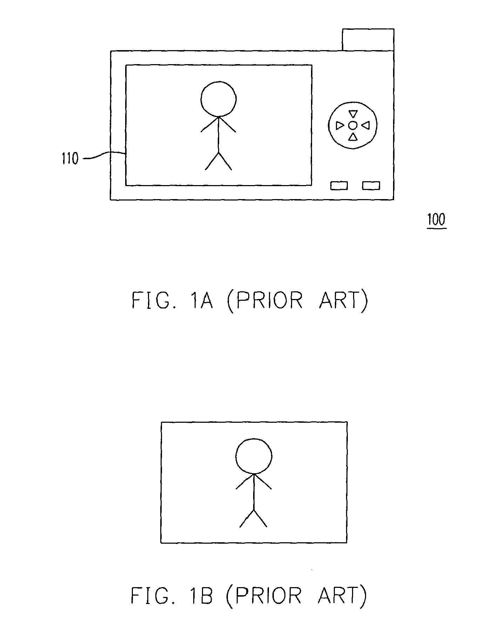

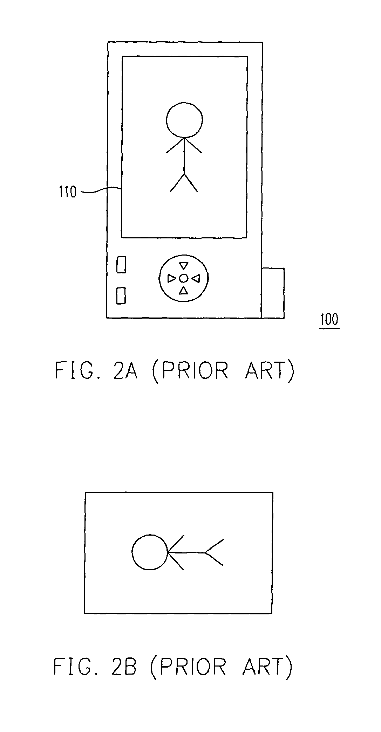

As for users of the digital video camera devices such as digital cameras or camera phones, they might hold the camera devices to capture images in a vertical or transverse direction due to personal habits or the manner for composing the picture. If the user captures pictures with different holding manners, some picture files in improper directions or even inversed directions may be viewed when browsing the pictures. Taking a digital camera 100 shown in FIG. 1A as an example, when the user takes a picture by holding the digital camera in a manner shown in FIG. 1A, the recorded picture file (as shown in FIG. 1B) is the same as that viewed by the user via a preview window 110. However, if the user takes a picture after rotating the digital camera 100 by 90 degrees rightwards (as shown in FIG. 2A), the recorded picture file is as shown in FIG. 2B. It can be clearly found that, the picture file shown in FIG. 2B is different from that viewed by the user from the preview window 110 when taking the picture (compared with the picture file shown in the preview window 110 in FIG. 2A, the picture file shown in FIG. 2B is turned by 90 degrees). However, when browsing the picture files, the user expects to directly view the picture identical to the image displayed in the preview window when taking the picture.

Accordingly, an exchangeable image file format (EXIF) is defined by Japan Electronics and Information Technology Industries Association (JEITA) to add a label field in each picture file for exclusively recording the direction information when the digital video camera device is used to take pictures. Certain picture browsers supporting the EXIF field can adjust the picture into the correct direction (i.e. the heads-up display mode) by automatically reading the direction information in the EXIF field. However, under an environment not supporting the EXIF field, the user has to turn the picture to a proper direction manually. That is to say, the user is restricted by the function of the picture browser when browsing the pictures, and cannot always directly view the pictures in the correct direction. If the picture browser does not support reading the EXIF field, the user has to turn the picture to the correct direction manually. As a result, it brings a lot of troubles to turn the picture to the proper direction manually, which further makes the browsing unsmooth and costs additional processing time, thereby causing much inconvenience to the picture browsing.

### SUMMARY OF THE INVENTION

Accordingly, the present invention is directed to an image processing method. Before being recorded, the images are processed according to different usage directions of an electronic device, so as to ensure that all images are recorded in a correct direction (i.e. the heads-up display mode).

The present invention is further directed to an electronic device, which automatically detects a usage direction of the electronic device itself when the electronic device is used for capturing images, so as to adjust a display angle of the image in real time, thereby recording the image in the correct direction.

As embodied and broadly described herein, the present invention provides an image processing method, which is suitable for processing images captured by a user with an electronic device. In this method, a default direction is defined first. Then, a usage direction of the electronic device is obtained. When the usage direction is not consistent with the default direction, the image is processed according to the default direction and the usage direction. Finally, the processed image is recorded.

In an embodiment of the present invention, the step of obtaining the usage direction of the electronic device includes detecting the usage direction of the electronic device with respect to the default direction through using a state sensing unit. The state sensing unit may be a g-sensor, an optical sensor, or a motion sensor.

In an embodiment of the present invention, the image captured by the electronic device has a display angle corresponding to the usage direction. The step of processing the image according to the default direction and the usage direction when the usage direction is not consistent with the default direction includes obtaining an image adjustment angle formed between the default direction and the usage direction, and then modifying the display angle of the image according to the image adjustment angle.

In an embodiment of the present invention, after the step of obtaining the usage direction of the electronic device, the method further includes directly recording the image when the usage direction is consistent with the default direction.

From another aspect, the present invention provides an electronic device, which includes an image capturing unit, a state sensing unit, a processing unit, and a recording unit. The image capturing unit is used for capturing images. The state sensing unit is used for obtaining a usage direction of the electronic device. The processing unit is connected to the image capturing unit and the state sensing unit respectively, for processing the images according to a default direction and the usage direction when it is determined that the usage direction is not consistent with the default direction. The recording unit connected to the processing unit is used for recording the processed images.

In an embodiment of the present invention, the state sensing unit is used for detecting the usage direction of the electronic device with respect to the default direction. The state sensing unit is, for example, a g-sensor, an optical sensor, or a motion sensor.

In an embodiment of the present invention, the image captured by the image capturing unit has a display angle corresponding to the usage direction. The processing unit is used for obtaining an image adjustment angle formed between the default direction and the usage direction, and then modifying the display angle of the image according to the image adjustment angle.

In an embodiment of the present invention, the processing unit is used for directly recording the image to the recording unit when it is determined that the usage direction is consistent with the default direction.

From still another aspect, the present invention further provides a recording medium for recording a computer program. The computer program includes a plurality of program codes and is loaded to the electronic device to enable the electronic device to execute the above image processing method.

The present invention automatically compares the usage direction of the electronic device with the default direction before recording the captured image, then adjusts the display angle of the image according to the comparison result, and finally records the adjusted image. Therefore, it can be ensured that the recorded files are all images in the correct direction, thereby saving the time required by the users to rotate the images manually.

### BRIEF DESCRIPTION OF THE DRAWINGS

The accompanying drawings are included to provide a further understanding of the invention, and are incorporated in and constitute a part of this specification. The drawings illustrate embodiments of the invention and, together with the description, serve to explain the principles of the invention.

FIGs. 1A and 2A are schematic views of a digital camera.

FIGs. 1B and 2B are schematic views of picture files captured and recorded through a conventional digital camera.

FIG. 3 is a block diagram of an electronic device according to an embodiment of the present invention.

FIG. 4 is a flow chart of an image processing method according to an embodiment of the present invention.

FIGs. 5A, 6A, 7A, and 8A are schematic views of an external appearance of the electronic device according to an embodiment of the present invention.

FIGs. 5B, 6B, 7B, and 8B are schematic views of images captured by an image capturing unit according to an embodiment of the present invention.

FIGs. 6C, 7C, and 8C are schematic views of recorded images according to an embodiment of the present invention.

### DESCRIPTION OF THE EMBODIMENTS

Reference will now be made in detail to the present preferred embodiments of the invention, examples of which are illustrated in the accompanying drawings. Wherever possible, the same reference numbers are used in the drawings and the description to refer to the same or like parts.

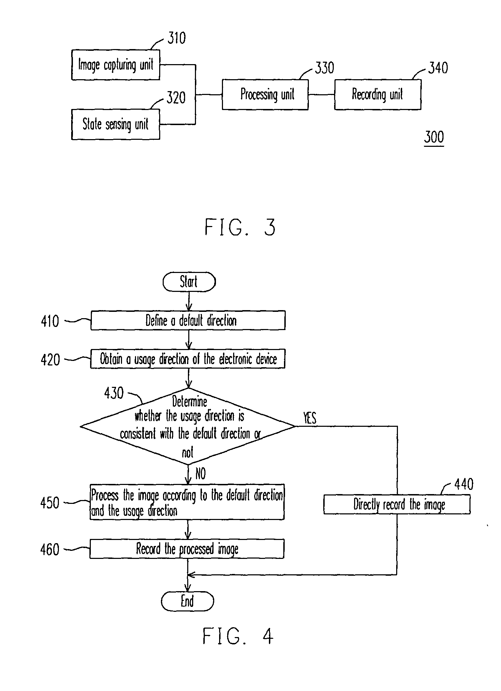

FIG. 3 is a block diagram of an electronic device according to an embodiment of the present invention. As shown in FIG. 3, an electronic device 300 includes an image capturing unit 310, a state sensing unit 320, a processing unit 330, and a recording unit 340. The electronic device 300 may be, but not limited to, a digital camera, a mobile phone, a personal digital assistant (PDA), or a smart phone having the photography function. In this embodiment, according to the appearance design and different model of the electronic device 300, a default direction is defined for the electronic device 300. Generally, the default direction is, for example, a direction that is most convenient for a user to view or make operations when holding the electronic device 300.

In the electronic device 300, the image capturing unit 310 is operated to enable the user to use the electronic device 300 to capture various images. The state sensing unit 320 is used for obtaining a usage direction of the electronic device 300. Particularly, the state sensing unit 320 is used to detect the usage direction of the electronic device 300 with respect to the default direction. The state sensing unit 320 is, for example, but not limited to, any sensor capable of sensing the current state of the device, such as a g-sensor, an optical sensor, or a motion sensor.

The processing unit 330 is connected to the image capturing unit 310 and the state sensing unit 320 respectively, and used for processing the image according to the default direction and the usage direction when it is determined that the usage direction of the electronic device 300 is not consistent with the default direction, and finally recording the processed image to the recording unit 340.

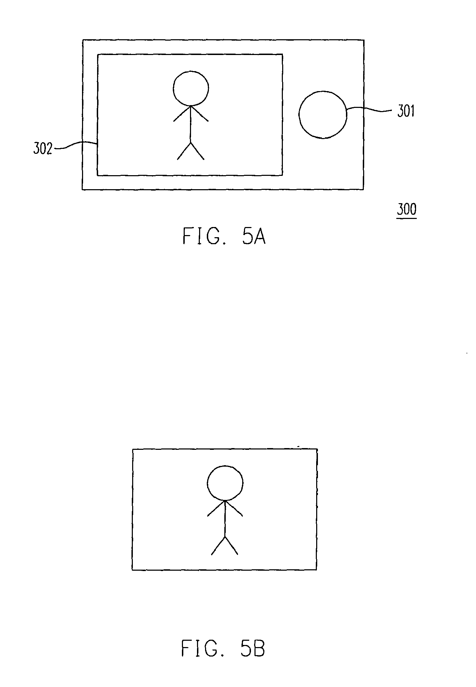

After the images are processed, all files recorded in the recording unit 340 are images displayed in the correct direction (i.e. the heads-up display mode). Another embodiment is described below to further illustrate the operation flow of the electronic device 300. FIG. 4 is a flow chart of an image processing method according to an embodiment of the present invention. Referring to FIGs. 3 and 4 together, in Step 410, a default direction must be defined for the electronic device 300. In order to facilitate the illustration, it is assumed that FIG. 5A is a schematic view of an external appearance of the electronic device 300, and in the following embodiments, it is assumed that the state show in FIG. 5A (i.e., a shutter button 301 is located on the right of the preview window 302) is a default direction for the electronic device 300, and the default direction is defined as 0 degrees.

Then, in Step 420, when the user presses the shutter button 301 to drive the image capturing unit 310 to capture an image, the state sensing unit 320 automatically obtains the usage direction of the electronic device 300 with respect to the default direction. In Step 430, the processing unit 330 determines whether the usage direction is consistent with the default direction or not.

When the user holds the electronic device 300 in the manner shown in FIG. 5A to capture an image, the usage direction is identical to the default direction, and thus, as shown in Step 440, the processing unit 330 directly records the image captured by the image capturing unit 310 (shown in FIG. 5B) to the recording unit 340.

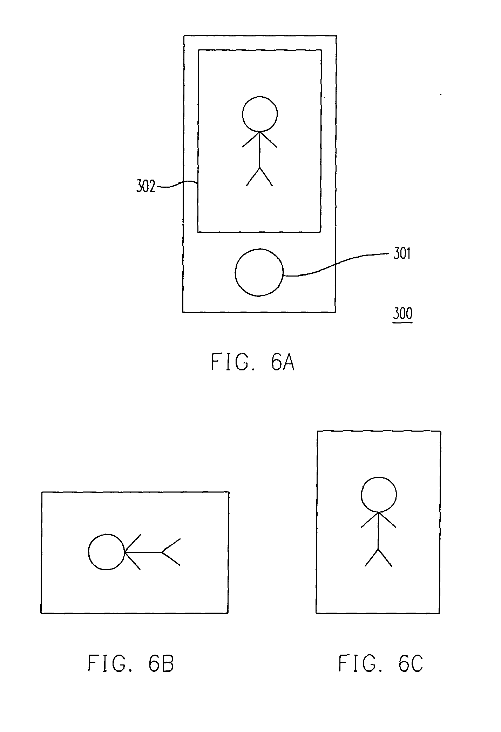

In another embodiment, if the user holds the electronic device 300 in a manner shown in FIG. 6A to capture an image, as show in Step 420, the state sensing unit 320 first obtains the current usage direction of the electronic device 300, and then informs the usage direction to the processing unit 330. In this embodiment, the state sensing unit 320 informs the processing unit 330 about the current usage direction of the electronic device 300, for example, in the form of angle information. For example, under the precondition that the default direction of the electronic device 300 is 0 degrees, as the state of the electronic device 300 in FIG. 5A is rotated rightwards by 90 degrees to be converted into the state shown in FIG. 6A, the usage direction information provided by the state sensing unit 320 is 90 degrees.

Afterwards, in Step 430, the processing unit 330 determines whether the usage direction is consistent with the default direction or not. In this embodiment, the usage direction (90 degrees) is not consistent with the previously defined default direction (0 degree), so that the processing unit 330 processes the image according to the default direction and the usage direction as shown in Step 450. The step of processing the image is further illustrated below.

First, through comparing FIG. 5A with FIG. 6A, it can be found that, when the user rotates the electronic device 300 rightwards by 90 degrees, the shutter button 301 is changed to be located under the preview window 302. Therefore, an included angle of 90 degrees is formed between the default direction and the current usage direction of the electronic device 300, which is taken as an image adjustment angle.

As shown in FIG. 6B, when the electronic device 300 is located at the usage direction shown in FIG. 6A, as the position of the image capturing unit 310 is changed along with the usage direction, the image captured by the image capturing unit 310 is shown in FIG. 6B. Compared with that shown in FIG. 5B, the image shown in FIG. 6B has a display angle corresponding to the usage direction. That is to say, when the electronic device 300 is located at such a usage direction, the image captured by the image capturing unit 310 is not consistent with the image viewed by the user on the preview window 302.

In a conventional processing method, the image shown in FIG. 6B is directly recorded. However, in this embodiment, the processing unit 330 modifies the display angle of the image in FIG. 6B according to the previously obtained image adjustment angle (i.e., 90 degrees). The step of modifying the display angle is realized by, for example, inverting each pixel in the image in a horizontal or vertical direction according to the image adjustment angle, so as to rotate the image, but the manner for modifying the display angle according to the image adjustment angle is not limited in the present invention. The modified image is shown in FIG. 6C.

Finally, in Step 460, the processing unit 330 records the processed image to the recording unit 340. Then, when browsing the files in the recording unit 340, the user can directly view the image as shown in FIG. 6C. As for the user, such image is an image in the correct direction without requiring any rotation process.

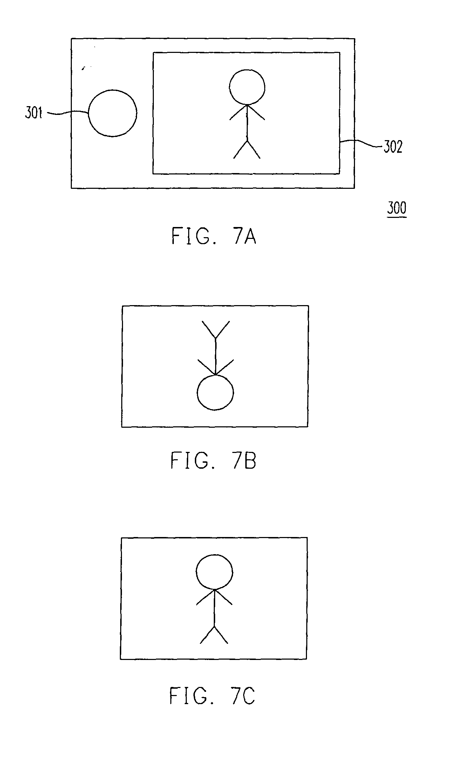

In the following embodiments, the present invention is further illustrated directed to other different usage directions. Referring to FIG. 7A, when the user holds the electronic device 300 in a manner shown in FIG. 7A to capture an image, the state sensing unit 320 detects that the current usage direction of the electronic device 300 is 180 degrees. Then, the processing unit 330 determines that the usage direction is not consistent with the default direction, and obtains an included angle formed between the default direction and the usage direction, which serves as the image adjustment angle. Then, the display angle of the image is adjusted according to the image adjustment angle.

Particularly, by comparing FIG. 5A with FIG. 7A, it can be found that, after rotating the electronic device 300, the position of the shutter button 301 is changed from the right part of the preview window 302 to the left part, and thus the image adjustment angle of this embodiment is 180 degrees. FIG. 7B shows the image captured by the image capturing unit 310, which has a display angle corresponding to the current usage direction. The processing unit 330 modifies the display angle of the image according to the image adjustment angle (i.e., 180 degrees), and further adjusts the image into an image with a correct direction. The modified image is then recorded in the recording unit 340, which is shown in FIG. 7C.

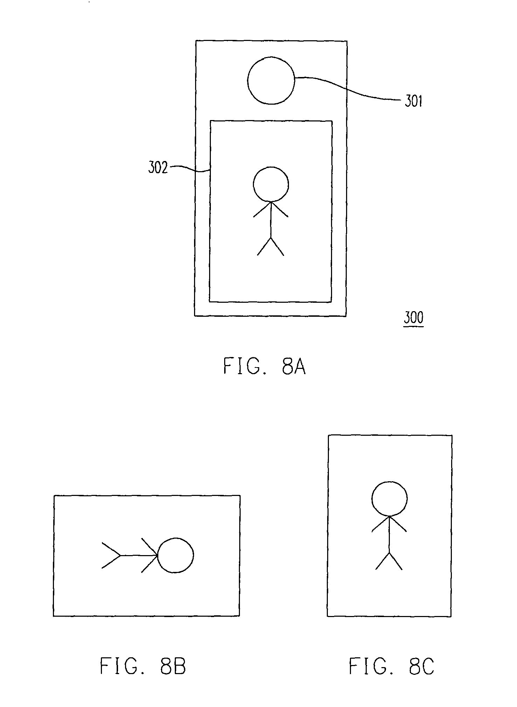

In yet another embodiment, when the user holds the electronic device 300 in a manner shown in FIG. 8A to capture an image, the state sensing unit 320 determines that the current usage direction of the electronic device 300 is 270 degrees. After determining that the usage direction is inconsistent with the default direction, the processing unit 330 obtains an included angle formed between the usage direction and the default direction to serve as an image adjustment angle. Then, the image captured by the image capturing unit 310 (as shown in FIG. 8B) is adjusted according to the image adjustment angle. After the display angle of the image in FIG. 8B has been adjusted, the image is shown in FIG. 8C. The image, already adjusted to the correct direction, is then recorded in the recording unit 340.

In the above embodiments, the electronic device 300 does not directly record the image captured by the image capturing unit 310 (such as the image shown in FIG. 5B, 6B, 7B, or 8B), but makes a comparison between the usage direction and the default direction first. Then, only when the usage direction and the default direction are identical to each other, the image is directly recorded, otherwise, the display angle of the image is adjusted, so as to obtain an image in the correct direction (such as the image shown in FIG. 6C, 7C, or 8C), and finally, the image in the correct direction is recorded.

As for a conventional digital camera or camera phone, when the user takes pictures in different usage directions, the pictures recorded in the memory card are not all in the correct direction, which can be displayed in the correct direction only after the rotation operation made by the user or the rotation processing through the picture browser. However, with the image processing method as described in above embodiments, all pictures are adjusted to the correct direction before being recorded in the recording unit. Therefore, no matter the used picture browser supports reading the EXIF field or not, the user can directly view the pictures in the correct direction.

It should be noted that, the image processing method can be executed on any electronic device having a processor. In other words, the above embodiments are designed as a computer program including a plurality of program codes, and the computer program is recorded in a computer-readable recording medium (such as an optical disk, a magnetic disk, and a removable hard disk). Once the computer program is loaded into the electronic device, the image processing method described in the above embodiments is executed on the electronic device.

In view of the above, in the above image processing method, the electronic device, and the recording medium according to the present invention, the usage direction of the electronic device when being used for capturing the image is compared with the default direction, and then the display angle of the image is adjusted according to the comparison result, and finally, after being adjusted to the correct direction, the image is recorded. Therefore, the user can browse the recorded images more quickly and conveniently. Moreover, when sending the images to others, it can ensure that the others can also view the images in the correct direction. The convenience in browsing the image is no longer restricted by the function of the picture browser, thereby greatly improving the smoothness when browsing images.

It will be apparent to those skilled in the art that various modifications and variations can be made to the structure of the present invention without departing from the scope or spirit of the invention. In view of the foregoing, it is intended that the present invention cover modifications and variations of this invention provided they fall within the scope of the following claims and their equivalents.

## Claims

1. An image processing method, for processing an image captured by an electronic device (300), the method being **characterized by** the steps of:
defining a default direction;
obtaining a usage direction of the electronic device (300) with respect to the default direction through a state sensing unit (320);
processing the image according to the default direction and the usage direction, when the usage direction is not consistent with the default direction; and recording the processed image.

2. The image processing method according to claim 1, **characterized in that** the state sensing unit (320) comprises one of a g-sensor, an optical sensor, and a motion sensor.

3. The image processing method according to claim 1, **characterized in that** the image captured by the electronic device (300) has a display angle corresponding to the usage direction, and the step of processing the image according to the default direction and the usage direction when the usage direction is not consistent with the default direction comprises:
obtaining an image adjustment angle formed between the default direction and the usage direction; and
modifying the display angle of the image according to the image adjustment angle.

4. The image processing method according to claim 1, **characterized in that** after the step of obtaining the usage direction of the electronic device (300), further comprising:
directly recording the image when the usage direction is consistent with the default direction.

5. An electronic device (300), comprising:
an image capturing unit (310), for capturing an image;
a state sensing unit (320), for obtaining a usage direction of the electronic device (300);
a processing unit (330), coupled to the image capturing unit (310) and the state sensing unit (320), for processing the image according to a default direction and the usage direction when it is determined that the usage direction is not consistent with the default direction; and
a recording unit (340), coupled to the processing unit (330), for recording the processed image.

6. The electronic device (300) according to claim 5, **characterized in that** the state sensing unit (320) is used for detecting the usage direction of the electronic device (300) with respect to the default direction.

7. The electronic device (300) according to claim 5 **characterized in that** the state sensing unit (320) comprises one of a g-sensor, an optical sensor, and a motion sensor.

8. The electronic device (300) according to claim 5, **characterized in that** the image captured by the image capturing unit (310) has a display angle corresponding to the usage direction, and the processing unit (330) is used for obtaining an image adjustment angle formed between the default direction and the usage direction, and modifying the display angle of the image according to the image adjustment angle.

9. The electronic device (300) according to claim 5, **characterized in that** the processing unit (330) is used for directly recording the image to the recording unit (340) when it is determined that the usage direction is consistent with the default direction.

10. A recording medium, suitable for recording a computer program, wherein the computer program comprises a plurality of program codes and is loaded to an electronic device (300) and enables the electronic device (300) to execute an image processing method, the electronic device (300) is used for capturing an image, and the method being **characterized by** the steps of:
defining a default direction;
obtaining a usage direction of the electronic device (300);
processing the image according to the default direction and the usage direction, when the usage direction is not consistent with the default direction; and
recording the processed image.

11. The recording medium according to claim 10, **characterized in that** the step of obtaining the usage direction of the electronic device (300) comprises:
detecting the usage direction of the electronic device (300) with respect to the default direction through a state sensing unit (320).

12. The recording medium according to claim 11, **characterized in that** the state sensing unit (320) comprises one of a g-sensor, an optical sensor, and a motion sensor.

13. The recording medium according to claim 10, **characterized in that** the image captured by the electronic device (300) has a display angle corresponding to the usage direction, and the step of processing the image according to the default direction and the usage direction when the usage direction is not consistent with the default direction comprises:
obtaining an image adjustment angle formed between the default direction and the usage direction; and
modifying the display angle of the image according to the image adjustment angle.

14. The recording medium according to claim 10, **characterized in that** after the step of obtaining the usage direction of the electronic device (300), further comprising:
directly recording the image when the usage direction is consistent with the default direction.
